# EUROPEAN PATENT APPLICATION

(11) **EP 2 958 169 A1**
(43) Date of publication of application: **23.12.2015**
(21) Application number: 15170817.9
(22) Date of filing: 05.06.2015
(51) Int. Cl.: H01M 2/14, H01M 2/16, B01D 67/00, H01M 10/0525, H01M 10/0566

(54) **FLEXIBLE POROUS FILM**

(30) Priority: 16.06.2014 US 201461998017 P; 26.05.2015 US 201514721002
(71) Applicant: Nano And Advanced Materials Institute Limited, Kowloon, Hong Kong (CN)
(72) Inventor: Liu, Chenmin, Kowloon (HK); Cai, Lifeng, Kowloon (HK); Wong, Ka Kan, Kowloon (HK); Choi, Shing Yan, Kowloon (HK)
(74) Representative: Modiano, Micaela Nadia

(57) **Abstract**

This invention provides a method for fabricating a flexible porous film. One application of the film is for fabricating a flexible lithium-ion battery. The method comprises depositing at least one electrospun layer on a flexible substrate sheet by electrospinning. The solution used in electrospinning comprises polyvinylidene fluoride (PVDF) and poly(vinylidene fluoride-hexafluoropropylene) (PVdF-HFP) copolymer dispersed in a solvent such that the solution has a polymer viscosity between 300cP to 1500cP. A preferred setting of electrospinning process parameters includes a voltage between 20kV and 50kV, a feed rate between 3ml/h and 12ml/h, and a spinning height between 100mm and 150mm. Preferably, PVDF and PVdF-HFP has a weight ratio between 1:1 and 5:1. The solvent may comprise dimethylformamide (DMF) and acetone in a weight ratio between 1:2 and 8:2. The weight of the copolymer is preferable to be 5% to 25% of a total weight of the copolymer and the solvent.

## Description

### CROSS-REFERENCE TO RELATED APPLICATION

This application claims priority to U.S. Provisional Application No. 61/998,017, filed June 16, 2014, and U.S. Non-Provisional Application No. 14/721,002, filed May 26, 2015, the disclosures of both of which are incorporated by reference herein in their entirety.

### FIELD OF THE INVENTION

The present invention relates to a flexible porous film fabricated by using an electro spinning technique. One application of the flexible porous film is for fabricating a flexible Li-ion battery.

### BACKGROUND

As used herein, a "flexible" object such as a flexible battery, a flexible membrane or a flexible film, is a solid non-rigid object having a shape that is adjustable. As such, the flexible object is bendable and squeezable.

Thin-film flexible lithium-ion (Li-ion) batteries are advantageously useful for a variety of applications where small-power sources are needed. A flexible battery can be manufactured in different shape and size as required by a customer. By adjusting the battery shape to fit available space in a device, the battery can provide the required power while occupying otherwise wasted space in the device and adding only negligible weight thereto. During fabrication of the flexible battery, the most challenging part is to prepare an electrolyte used in the battery. Since the electrolyte is usually in liquid form, it is required to use a porous film to soak with the electrolyte so as to retain the electrolyte in the film. This film is commonly known as a separator of the battery. When the battery is bent or reshaped, there is a risk that the electrolyte leaks out from the film to cause a voltage change of the battery, thus affecting the reliability of the battery. It is desirable to have a porous film having a high reliability in retaining the electrolyte therein even when the film is bent or reshaped.

In the disclosure of L. Hu, H. Wu, F. La Mantia, Y. Yang and Y. Cui, "Thin, flexible secondary Li-ion paper batteries," ACS Nano, vol. 4 (10), pp 5843-5848, 2010, which is incorporated by reference herein in its entirety, paper is used as a separator for a flexible Li-ion battery. Although flexibility is obtained, porosity of the paper cannot be tuned, so that the charging rate/conductivity of the battery is not tunable. Furthermore, paper is not stable in the existence of solvent commonly present in an electrolyte. The paper separator is softened and broken after a long period of immersion in the solvent, leaking out the liquid electrolyte therein and causing short circuit.

In the disclosure of N. Singh et al., "Paintable battery," Scientific Reports, vol. 2 (481), 28 June 2012, which is incorporated by reference herein in its entirety, a polymer paint is used as the separator of a battery. Although it does not seem to have the leakage problem when the battery is bent, the porosity and the conductivity of the polymer paint are low, resulting in a low charging rate so that the required recharge time is increased when compared to a traditional Li-ion battery.

There is a need in the art to have a porous film that is flexible, has high porosity, and is capable of retaining a liquid therein without leaking out even when the film is reshaped. One advantageous application of such film is in fabricating flexible Li-ion batteries. In general, such film is usable to other applications that require holding a liquid therein without leaking in case the film is reshaped.

### SUMMARY OF THE INVENTION

The present invention provides a method for fabricating a flexible porous film. The method comprises depositing a first electrospun layer on a first surface of a flexible substrate sheet by an electrospinning process. In particular, the electro spinning process comprises electrospinning a fiber from a substantially homogeneous solution onto the substrate sheet under a plurality of process parameters. The solution comprises polyvinylidene fluoride (PVDF) and poly(vinylidene fluoride-hexafluoropropylene) (PVdF-HFP) copolymer dispersed in a solvent such that the solution has a polymer viscosity between 300cP to 1500cP. The plurality of process parameters comprises a voltage between 20kV and 50kV, a feed rate between 3ml/h and 12ml/h, and a spinning height between 100mm and 150mm.

Preferably, the PVDF and the PVdF-HFP used in the copolymer has a weight ratio between 1:1 and 5:1.

It is also preferable that the solvent comprises dimethylformamide (DMF) and acetone. In addition, the DMF and the acetone used in the solution may have a weight ratio between 1:2 and 8:2.

One preferable setting is that the copolymer has a weight that is 5% to 25% of a total weight of the copolymer and the solvent.

The plurality of process parameters may further comprise an ambient humidity between 20% and 50%.

Preferably, the substrate sheet is composed of polypropylene (PP) or polyethylene (PE), or is a trilayer PP/PE/PP electrolytic separator membrane.

A flexible battery is realizable by including a solid electrolyte that comprises the flexible porous film formed by the disclosed method. The film is further socked with a liquid electrolyte.

Other aspects of the present invention are disclosed as illustrated by the embodiments hereinafter.

### BRIEF DESCRIPTION OF THE DRAWINGS

FIG. **1** depicts a structure of a flexible porous film realized according to one embodiment of the present invention, where the film comprises a substrate sheet sandwiched by two porous layers each formed by an electro spinning process.
FIG. **2** depicts a typical set-up for realizing the electro spinning process as disclosed in the present invention.
FIG. **3** depicts an example of a flexible battery realizable by the film as disclosed.

### DETAILED DESCRIPTION

As used herein in the specification and appended claims, a parameter "between" a first value and a second value means that the parameter has a value in a range, *inclusively,* of the first value and the second value. It implies that the parameter may have a value equal to the first value or the second value.

During the development of the present invention, the inventors first focused on a particular application for making a flexible Li-ion battery, and used a special electro spinning technique to fabricate an aligned nanofiber film on each side of a commercial separator to make a sandwich structure or a freestanding nanofiber mat. The inventors have found that the nanofiber layer has very good electrolyte absorbance that is capable of taking 10 times of a liquid electrolyte of its own weight, while the commercial separator can serve as a very good mechanical support to avoid any breakage and deforming during battery operation. The film also has high porosity. The high porosity of the film and a suitable choice of an electrode structure alleviate the slow mass transport problem of the solid electrolyte using polymer gel. Furthermore, the high absorption ability of the porous mesh eliminates a need for a rigid container for the electrolyte. Together with a suitable choice of electrode material, the developed solid electrolyte is advantageously usable for enhancing the safety, flexibility, ionic conductivity, and energy density of the flexible Li-ion battery.

An aspect of the present invention is a method for fabricating a flexible porous film. In elaborating details of the flexible porous film disclosed herein, we focus on an application of the disclosed film to fabricate a flexible Li-ion battery. However, the porous film disclosed herein is not limited only to this application. The disclosed film is also usable to other applications.

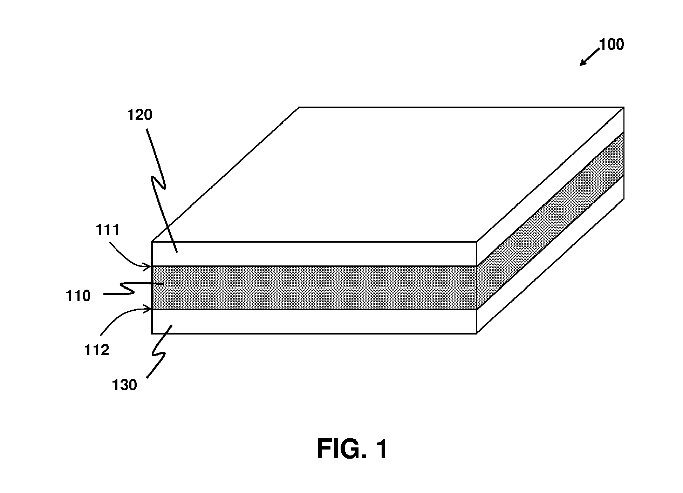

Before the disclosed method is detailed, a structure of a film **100** formable by the method is depicted in FIG. **1****.** The film **100** comprises a substrate sheet **110** having two porous layers 120, 130 deposited thereon to form a sandwich structure. The sandwich structure is required when the film **100** is used to form a solid electrolyte in a flexible Li-ion battery after soaking with a liquid electrolyte. However, other potential applications may require or prefer only one of the two surfaces to be deposited with the porous layer. Some other potential applications may also require only one surface to have the porous layer while another surface is treated or finished differently. In general, the film **100** comprises the substrate sheet and at least one porous layer **(120** or **130)** on the substrate sheet **110.** Each porous layer is formed by electrospinning. Without loss of generality, the porous layers **120** and **130** are regarded as a first electrospun layer **120** and a second electrospun layer **130,** respectively.

Exemplarily, the method comprises depositing the first electrospun layer **120** on a first surface **111** of the substrate sheet **110** by an electrospinning process. In particular, the substrate sheet **110** is flexible. Optionally, the method further comprises depositing the second electrospun layer **130** on a second surface **112** of the substrate sheet **110** by the electrospinning process. Note that the second surface **112** is opposite to the first surface **111.**

Parameters used in the electrospinning process are important in order to confer the film **100** with the characteristics of high porosity and being flexible, as well as the capability to retain a liquid therein even if the film **100** is bent or reshaped. Although the present invention is not intended to be bound by any theory, the inventors believe that if nanofibers that form an electrospun layer **(120** or **130)** are more closely packed than is achieved by a commonly-used electrospinning technique, there is a chance that molecules of the liquid are more tightly retained within a network formed by the nanofibers. This higher liquid-retaining ability is advantageously usable to resist an external force introduced by bending or reshaping the electrospun layer, preventing the liquid in the electrospun layer to be leaked out. Based on this reasoning, the inventors conducted experiments and identified a preferred set of solution compositions and process parameters used in the electro spinning process.

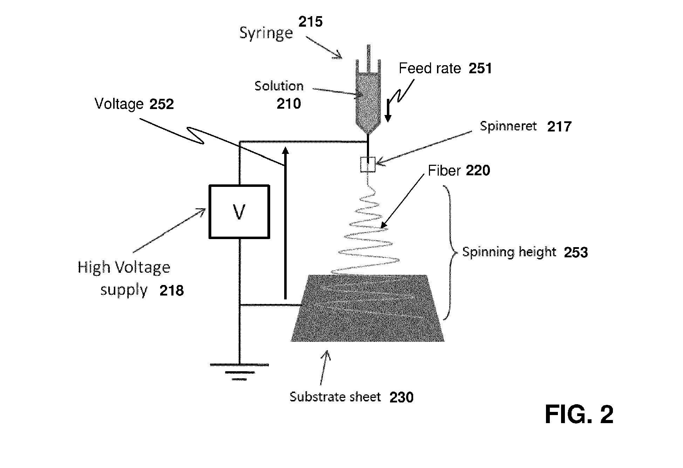

FIG. **2** depicts a typical set-up for realizing the electro spinning process. The electro spinning process comprises electrospinning a fiber **220** from a substantially homogeneous solution **210** onto a substrate sheet **230** under a plurality of process parameters. The solution **210** is contained in a syringe **215,** and is ejected at a feed rate **251** through a spinneret **217,** which spins so that the fiber **220** spirally lands on the substrate sheet **230** to form an electrospun layer thereon. A high voltage supply **218** is used to supply a voltage **252** between the spinneret **217** and the substrate sheet **230.** An exemplary preferred set of solution compositions and process parameters is given as follows. The solution **210** comprises polyvinylidene fluoride (PVDF) and poly(vinylidene fluoride-hexafluoropropylene) (PVdF-HFP) copolymer dispersed in a solvent such that the solution has a polymer viscosity between 300cP to 1500cP. The plurality of process parameters comprises the voltage **252,** the feed rate **251** and a spinning height **253,** where the voltage **252** is between 20kV and 50kV, the feed rate **251** is between 3ml/hour and 12ml/hour, and the spinning height **253** is between 100mm and 150mm.

In one preferable setting, PVDF and PVdF-HFP used in the copolymer has a weight ratio between 1:1 and 5:1.

Practically and preferably, the solvent that is used to disperse the copolymer comprises dimethylformamide (DMF) and acetone. A preferable setting is that the DMF and the acetone used in the solution have a weight ratio between 1:2 and 8:2.

In another preferable setting, the copolymer has a weight that is 5% to 25% of a total weight of the copolymer and the solvent.

The plurality of process parameters may further include an ambient humidity. The ambient humidity has a preferred range of 20% to 50%.

During the electrospinning process, it is also required to control a spinneret speed and a rotational speed of the spinneret **217.** Typical values of the spinneret speed and the rotational speed are 20mm/second and 2000 rotations per minute, respectively.

Practically, it is desirable to select the substrate sheet **230** from commercially available sheets. In particular, it is preferable, especially for the application of making a flexible Li-ion battery, that the substrate sheet is composed of polypropylene (PP) or polyethylene (PE), or is a trilayer PP/PE/PP electrolytic separator membrane.

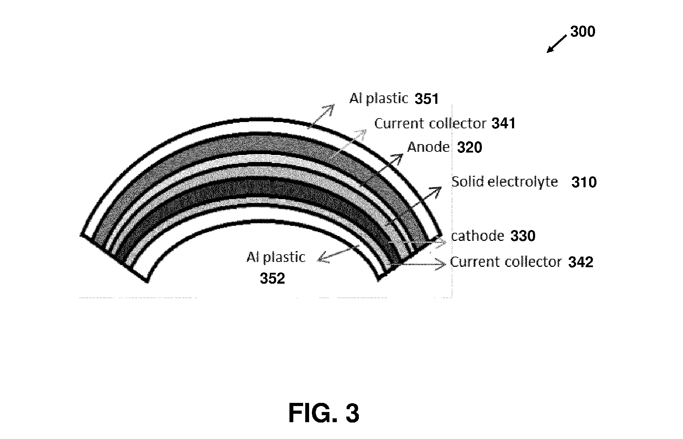

FIG. **3** depicts an example of a flexible battery realizable by the film fabricated by the disclosed method. A flexible battery **300** comprises a solid electrolyte **310.** The solid electrolyte **310** comprises the flexible porous film formed by any one embodiment of the method disclosed above. Furthermore, the film is soaked with a liquid electrolyte. For the flexible battery **300** that is a Li-ion battery, the liquid electrolyte may be selected from LiPF₆, LiClO₄, (C₂H₅)₄AN, H₂O, N₂SO₄, NaOH, NaCl, or a combination thereof.

Based on the solid electrolyte **310** as disclosed above, an ordinary person skilled in the art can use existing battery designs to realize a flexible battery. For example, one structure of flexible battery is given by the disclosure of L. Hu, H. Wu, F. La Mantia, Y. Yang and Y. Cui mentioned above. In the flexible battery **300,** the solid electrolyte **310** is sandwiched between an anode **320** and a cathode **330.** A first current collector **341** and a second current collector **342** are positioned to contact the anode **320** and the cathode **330,** respectively. The first current collector **341** and the second current collector **342** are further encapsulated by a first aluminum plastic sheet **351** and a second aluminum plastic sheet **352,** respectively.

The present invention may be embodied in other specific forms without departing from the spirit or essential characteristics thereof. The present embodiment is therefore to be considered in all respects as illustrative and not restrictive. The scope of the invention is indicated by the appended claims rather than by the foregoing description, and all changes that come within the meaning and range of equivalency of the claims are therefore intended to be embraced therein.

## Claims

1. A method for fabricating a flexible porous film, comprising:
depositing a first electrospun layer on a first surface of a flexible substrate sheet by an electro spinning process;
wherein:
the electrospinning process comprises electro spinning a fiber from a substantially homogeneous solution onto the substrate sheet under a plurality of process parameters;
the solution comprises polyvinylidene fluoride (PVDF) and poly(vinylidene fluoride-hexafluoropropylene) (PVdF-HFP) copolymer dispersed in a solvent such that the solution has a polymer viscosity between 300cP to 1500cP; and
the plurality of process parameters comprises:
a voltage between 20kV and 50kV;
a feed rate between 3ml/h and 12ml/h; and
a spinning height between 100mm and 150mm.

2. The method of claim 1, wherein PVDF and PVdF-HFP used in the copolymer has a weight ratio between 1:1 and 5:1.

3. The method of claim 1, wherein the solvent comprises dimethylformamide (DMF) and acetone.

4. The method of claim 3, wherein DMF and acetone used in the solution has a weight ratio between 1:2 and 8:2.

5. The method of claim 1, wherein the copolymer has a weight that is 5% to 25% of a total weight of the copolymer and the solvent.

6. The method of claim 1, wherein the plurality of process parameters further comprises:
an ambient humidity between 20% and 50%.

7. The method of claim 1, wherein the substrate sheet is composed of polypropylene (PP) or polyethylene (PE), or is a trilayer PP/PE/PP electrolytic separator membrane.

8. The method of claim 1, further comprising:
depositing a second electrospun layer on a second surface of the substrate sheet by the electrospinning process, the second surface being opposite to the first surface.

9. A flexible porous film formed by the method of any of the preceding claims.

10. A flexible battery, comprising:
a solid electrolyte comprising the flexible porous film of claim 9, wherein the flexible porous film is further socked with a liquid electrolyte.

11. The flexible battery of claim 10, wherein the liquid electrolyte is LiPF₆, LiClO₄, (C₂H₅)₄AN, H₂O, H₂SO₄, NaOH, NaCl, or a combination thereof.

12. The flexible battery of claim 10, further comprising:
an anode coupled to one surface of the solid electrolyte; and
a cathode coupled to another surface of the solid electrolyte, said another surface being opposite to said one surface.

13. The flexible battery of claim 12, further comprising:
a first current collector coupled to the anode; and
a second current collector coupled to the cathode.
